# EUROPÄISCHE PATENTSCHRIFT

(11) **EP 2 072 322 B1**
(45) Veröffentlichungstag und Bekanntmachung des Hinweises auf die Patenterteilung: **01.04.2015**
(21) Anmeldenummer: 07024774.7
(22) Anmeldetag: 20.12.2007
(51) Int. Cl.: B60M 1/23, B60M 1/30

(54) **Stromschienenbefestigungsanordnung**
Conductor rail mounting device
Dispositif de fixation de rails conducteurs

(43) Veröffentlichungstag der Anmeldung: 24.06.2009
(73) Patentinhaber: Furrer + Frey AG, 3000 Bern 6 (CH)
(72) Erfinder: Nünlist, Felix, 3037 Herrenschwanden (CH)
(74) Vertreter: von Bülow, Tam

(56) Entgegenhaltungen:
- DE-C- 156 904
- DE-C- 394 317
- DE-C- 845 351
- DE-U1- 29 621 605
- DE-U1-202004 009 416

## Beschreibung

Die Erfindung betrifft eine Stromschienenbefestigungsanordnung gemäß dem Oberbegriff des Patentanspruches 1. Eine solche Stromschienenanordnung ist aus der DE 20 2004 009 416 U bekannt.

Die DE 156 904 C zeigt eine Aufhängung einer Fahrleitung an Hilfsdrähten für elektrische Bahnen mit hohen Fahrgeschwindigkeiten. Ein Fahrdraht ist über Isolatoren und vertikale Hilfsdrähte an einem Tragdraht gehalten, der seinerseits über Querdrähte an Masten aufgehängt ist. Zusätzlich sind die Isolatoren über quer zur Fahrtrichtung verlaufende Hilfsdrähte entweder mit Masten oder mit an den Masten befestigten Spanndrähten befestigt, wobei die Befestigungspunkte der Spanndrähte an den Masten tiefer liegen als die Isolatoren, woraus eine Belastung des Fahrdrahtes in Richtung zur Schiene entsteht, die ein Anheben des Fahrdrahtes verhindert. Die Spanndrähte verlaufen von den Masten zu den Hilfsdrähten für die Halterung der Isolatoren somit unter einen Höhenwinkel und unter einem Horizontalwinkel gegenüber dem Fahrdraht und anschließend über einen Abschnitt bis zum nächsten Isolator parallel zum Fahrdraht.

Die DE 845 351 C zeigt eine Fahrleitungsanordnung für Oberleitungsomnibusse mit zwei parallel geführten Fahrdrähten, die von Tragdrähten gehalten werden, die an Masten befestigt sind. Die Tragdrähte sind durch Querdrähte miteinander verbunden. Somit verlaufen die Tragdrähte ausgehend von den genannten Querdrähten unter einem Höhenwinkel und einem Horizontalwinkel zu den Fahrdrähten und abschnittsweise auch parallel zu den Fahrdrähten.

Die DE 394 317 C zeigt eine Fahrleitungsaufhängung unter Bauwerken geringer Bauhöhe oder Tunnels, bei der der Fahrdraht mittels Spezialklemmen besonders geringer Bauhöhe an einem oder zwei Tragdrähten aufgehängt ist, wobei beide Tragdrähte stets in gleicher Höhe nebeneinander geführt sind.

Die DE 296 21 605 U1 beschreibt eine Vorrichtung zur Kopplung von elastischen und starren Fahrleitungssystemen mit einem langgestreckten Federbalken, der in einem Übergangsbereich zwischen einem elastischen Fahrdraht und einer starren Stromschiene angeordnet ist und dessen mechanische Steifigkeit in Längsrichtung stetig variiert ist.

Als Oberleitung für schienengebundene, elektrisch angetriebene Fahrzeuge werden häufig anstelle eines einfachen Fahrdrahtes auch Stromschienen eingesetzt. Dies gilt einerseits für Tunnels, deren Höhe die auf freien Strecken übliche Fahrdrahtaufhängung nicht gestattet und andererseits aber auch für freie Strecken, die mit hohen Geschwindigkeiten befahren werden, da bei solchen Hochgeschwindigkeitsstrecken, die mit 240km/h und höher befahren werden, ein exakter Abstand zwischen Fahrdraht und Gleis unabdingbar ist, um möglichst gleichmäßige Kontaktkräfte zwischen dem Stromabnehmer des Fahrzeuges und dem Fahrdraht zu haben. Sich ändernde Abstände führen zu Kontaktkraftschwankungen und damit Schwankungen des elektrischen Übergangswiderstandes, was unerwünschte Funkenbildung zur Folge hat und auch einen höheren Verschleiß am Stromabnehmer des Fahrzeuges und/oder am Fahrdraht, sei es durch Abrieb oder durch Funkenerosion. Auch in Bereichen mit hohem Strombedarf, wie z.B. Bahnhöfen, werden Stromschienen wegen ihres größeren elektrisch wirksamen Querschnittes verwendet.

Es ist daher bekannt, solche Stromschienen elastisch zu befestigen (vgl. US 4,230,209, DE 195 17 806 A1, DE 195 48 103 C1 oder EP 0572869 B1).

Sollen Stromschienen auf freier Strecke an einem Tragwerk mit Tragseilen aufgehängt werden, beispielweise um auch in einem Bahnhofsbereich oder zwischen benachbarten Tunneln den benötigten hohen elektrisch wirksamen Querschnitt der Stromschiene zur Verfügung zu haben, so ist es wünschenswert den Abstand zwischen in Fahrtrichtung benachbarten Tragwerken möglichst groß zu gestalten und trotzdem eine einwandfreie Anordnung der Stromschiene und des Fahrdrahtes zu erreichen und selbstverständlich auch auftretende Windkräfte und Schneelasten sicher zu beherrschen.

Man hat daher bisher Tragelemente für die Stromschiene unmittelbar an die tragwerkbildenden Joche oder Tragarme angebracht, die in der Praxis in Fahrtrichtung relativ dicht beieinander stehen mußten. Die übliche Länge der Stromschiene zwischen zwei benachbarten Tragwerken beträgt 12 Meter.

Aufgabe der Erfindung ist es, die Stromschienenanordnung der eingangs genannten Art dahingehend zu verbessern, daß ein vergrößerter Tragwerksabstand möglich ist und damit weniger Tragwerke benötigt werden.

Diese Aufgabe wird durch die im Patentanspruch angegebenen Merkmale gelöst. Vorteilhafte Ausgestaltungen und Weiterbildungen der Erfindung sind den unteransprüchen zu entnehmen.

Die Grundidee der Erfindung besteht darin, die Stromschiene zwischen benachbarten Tragwerken an Halteelementen zu befestigen, die ihrerseits über Tragseile mit dem benachbarten Tragwerk verbunden sind und die miteinander über Spannseil verbunden sind. Die Halteelemente weisen jeweils ein Gleitelement auf, das eine relative Verschiebung in Längsrichtung der Stromschiene zwischen Stromschiene und Haltelement gestattet. Hierdurch werden unter anderem auf die Stromschiene wirkende Längskräfte vermieden.

Vorzugsweise sind die Abstände der Halteelemente zum jeweils nächstgelegenen Tragwerk einerseits und der Abstand der benachbarten Halteelemente zwischen zwei Tragwerken zueinander gleich groß und betragen somit jeweils etwa ein Drittel des Tragwerkabstandes.

Die Tragseile an den Halteelementen sind paarweise im wesentlichen spiegelsymmetrisch zur Mittelachse der Stromschiene unter einem Horizontalwinkel (α) angeordnet und in Bezug auf die Fahrebene unter einem Höhenwinkel (β).

Die zwei zwischen zwei Tragwerken liegende Halteelemente verbindenden Spannseile verlaufen bei geradliniger Stromschiene parallel zu dieser. Bei bogenförmig gekrümmter Stromschiene werden die Halteelemente vorzugsweise so angeordnet, daß eine gerade Linie, die durch die Mitte von zwei zwischen zwei Tragwerken benachbart liegenden Halteelementen verläuft, sich in den Halteelementen mit einer Mittellinie der bogenförmigen Stromschiene schneidet.

Bei einem bevorzugten Ausführungsbeispiel, das konstruktiv robust und einfach aufgebaut ist, haben die Halteelemente ein Rohr, an dessen beiden Enden Halteplatten angebracht, vorzugsweise angeschweißt sind, an denen die Trag- und Spannseile befestigt werden. An dem Rohr sind zwei Tragelemente befestigt, die nach Art einer Rohrschelle um das Rohr herum verlaufen und dort mit Klemmschrauben reibschlüssig verbunden werden, wobei die Tragelemente jeweils gegenüberliegende Halteeinrichtungen mit einer Nut aufweisen, in die ein Querträger der Stromschiene eingreift.

In vorteilhafter Weise ist in die sich gegenüberliegenden Nuten jeweils ein Gleitelement aus Kunststoff oder sonstigem reibungsminderndem Material eingesetzt, um die oben erwähnte Relativverschiebung zwischen Stromschiene und Halteelement zu ermöglichen.

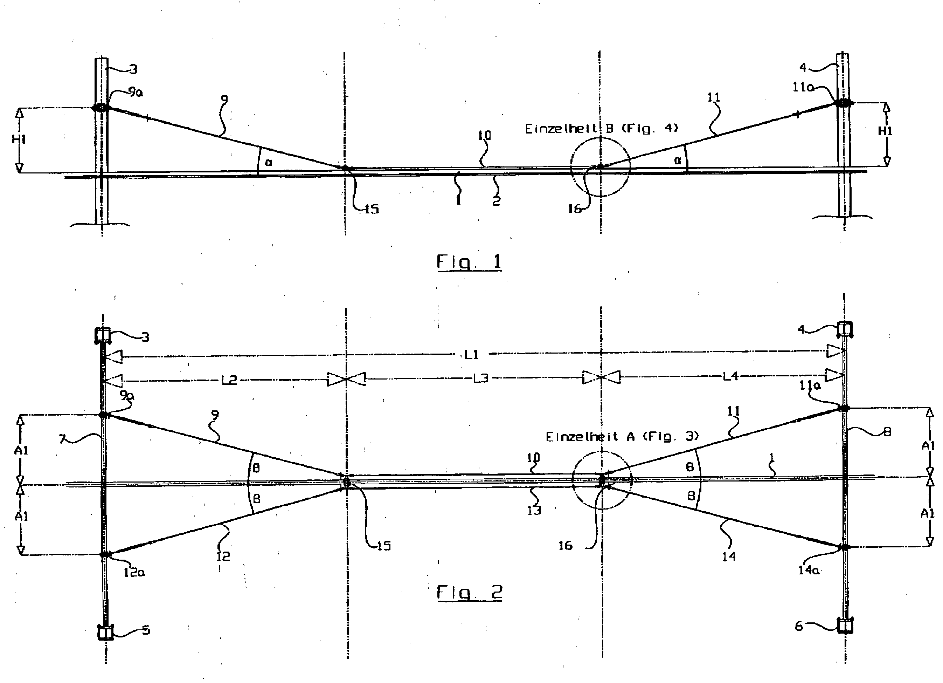

Im folgenden wird die Erfindung anhand eines Ausführungebeispieles im Zusammenhang mit der Zeichnung ausführlicher erläutert. Es zeigt:
- Fig. 1: eine schematische Skizze der Stromschienenbefestigungsanordnung nach der Erfindung in Seitenansicht;
- Fig. 2: eine Draufsicht der Stromschienenbefestigungsanordnung der Fig. 1
- Fig. 3: eine vergrößerte Ansicht der Einzelheit A der Fig. 2;
- Fig. 4: eine vergrößerte Ansicht der Einzelheit B der Fig. 1;
- Fig. 5: einen Schnitt längs der Linie V-V der Fig. 3;
- Fig. 6: einen Schnitt längs der Linie 6-6 der Fig. 4; und
- Fig. 7: eine Draufsicht ähnlich Fig. 2 mit einer bogenförmig gekrümmten Stromschiene.
Zunächst sei auf die Fig. 1 und 2 Bezug genommen. Eine Stromschiene 1 mit eingespanntem Fahrdraht 2 ist abschnittsweise über eine Länge L1 an Masten 3, 4, 5, und 6 und/oder an Jochen 7 und 8 über Tragseile 9, 11, 12, und 14 aufgehängt. Die Masten 3, 5 und das Joch 7 bilden dabei ein erstes Tragwerk und die Masten 4, 6 und das Joch 8 ein zweites Tragwerk. Im dargestellten Ausführungsbeispiel der Fig. 2 sind die beiden Joche 7 und 8 jeweils quer zur Längsachse der Stromschiene 1 zwischen sich gegenüberstehenden Masten 3 und 5 bzw. 4 und 6 angeordnet und an diesen Masten befestigt, beispielsweise angeschraubt. Die Aufhängung an Masten erfolgt normalerweise auf sogenannten Freilandstrecken, während in einem Tunnel oder Unterführungen Joche oder sonstige Befestigungspunkte auch an der Tunnel- oder Unterführungswand direkt angebracht sein können.

Die Tragseile 9, 11, 12 und 14 haben gegenüber der Längsachse der Stromschiene 1 einen ersten Winkel α, der als "Höhenwinkel" bezeichnet werden soll, da er die Höhe H1 der Befestigungspunkte 9a, 11a, 12a und 14a gegenüber der Stromschiene 1 bestimmt. Die jeweils auf einer Seite der Stromschiene liegenden Tragseile 9 und 11 einerseits und 12 und 14 andererseits sind jeweils über parallel zur Stromschiene 1 verlaufende Spannseile 10 bzw. 13 miteinander verbunden. An dem Verbindungspunkten zwischen den Tragseilen und den Spannseilen sind Halteelemente 15 und 16 angebracht, an denen die Stromschiene 1 gehalten ist, wie im Zusammenhang mit den weiteren Figuren detaillierter beschrieben wird.
Wie aus Fig. 2 zu ersehen ist, haben die Spannseile 9, 11, 12 und 14 in der Draufsicht gegenüber der Stromschiene 1 einen Winkel β, der als "Horizontalwinkel" bezeichnet wird, da er denn horizontalen Abstand A1 der Befestigungspunkte 9a, 11a, 12a und 14a längs des Joches 7 bzw. 8 gegenüber der Stromschiene 1 definiert. Die Halteelemente 15 und 16 haben gegenüber dem nächstgelegenen Joch 7 bzw. 9 einen Abstand L2 bzw. L4, während der Abstand der beiden Halteelemente 15 und 16 gegeneinander L3 beträgt. Vorzugsweise sind die Längen L2, L3 und L4 gleich groß und betragen somit jeweils 1/3 der Länge L1.

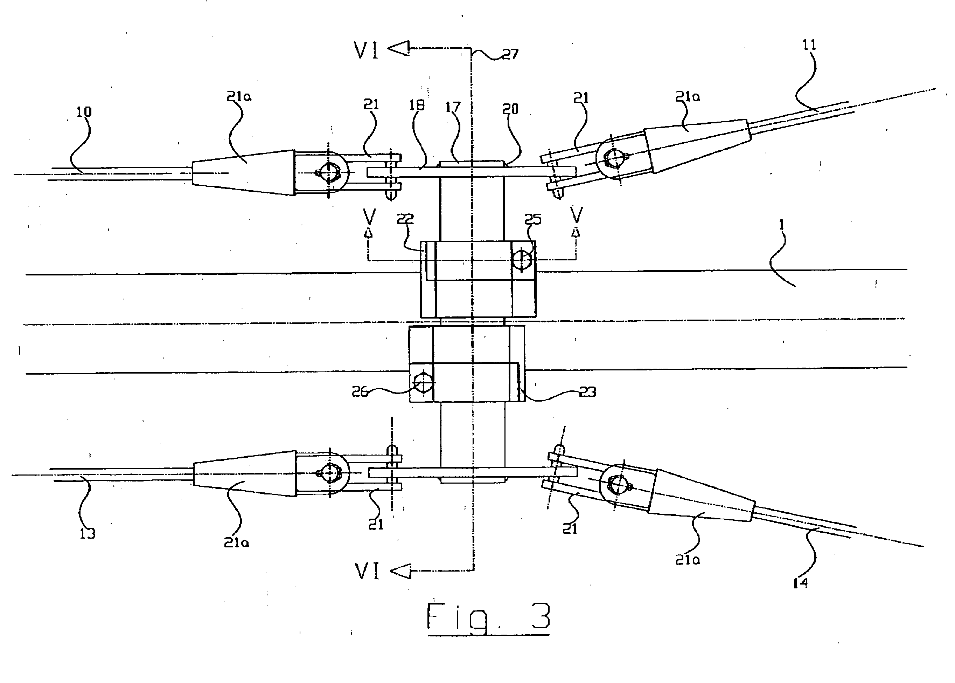

Fig. 3 zeigt detaillierter eine Draufsicht des Halteelementes 16. An einem Rohr 17 sind beidseitig nahe dessen Ende Halteplatten 18 und 19 angeschweißt, was durch Schweißnähte 20 dargestellt ist. An der Halteplatte 18 sind das Tragseil 11 und das Spannseil 10 gegenüberliegend befestigt. An der Halteplatte 19 sind das Tragseil 14 und das Spannseil 13 gegenüberliegend befestigt. Die Befestigung erfolgt beispielsweise mit einem Schäkel, einem Bolzen oder mit sonstiger bekannter Verbindung, die jeweils in ein Loch an der zugeordneten Halteplatte eingreifen und über eine Preßhülse 11a am jeweiligen Ende des entsprechenden Seiles 10, 11, 13, 14 befestigt sind. Selbstverständlich können die genannten Seile auch in sonstiger bekannter Weise an den Halteplatten 18 und 19 befestigt werden.

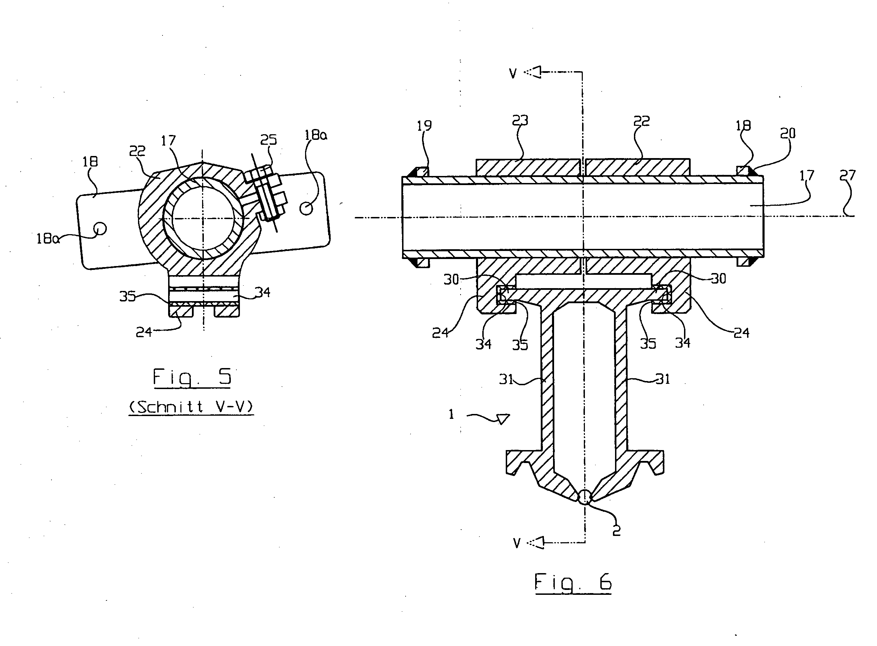

An dem Rohr 17 sind zwei Tragelemente 22 und 23 angebracht, die das Rohr 17 ähnlich einer Rohrschelle weitestgehend umgreifen (vgl. Fig. 5) und die eine Halteeinrichtung 24 für die Stromschiene 1 aufweisen, was im Zusammenhang mit Fig. 5 ausführlicher erläutert wird. Die beiden Tragelemente 22 und 23 werden jeweils mit einer Klemmschraube 25 bzw. 26 an dem Rohr 17 befestigt, wobei die beiden Tragelemente 22 und 23 in Bezug auf eine Mittelachse 27 des Rohres 17 spiegelversetzt angeordnet sind, damit die Schrauben 25 und 26 jeweils besser zugänglich sind.

Man erkannt, daß die beiden Tragelemente 22 und 23 innerhalb des von den beiden Halteplatten 18 und 19 begrenzten Weges längs der Längsachse 27 verschoben werden können, zur Montage und Demontage der Stromschiene 1.

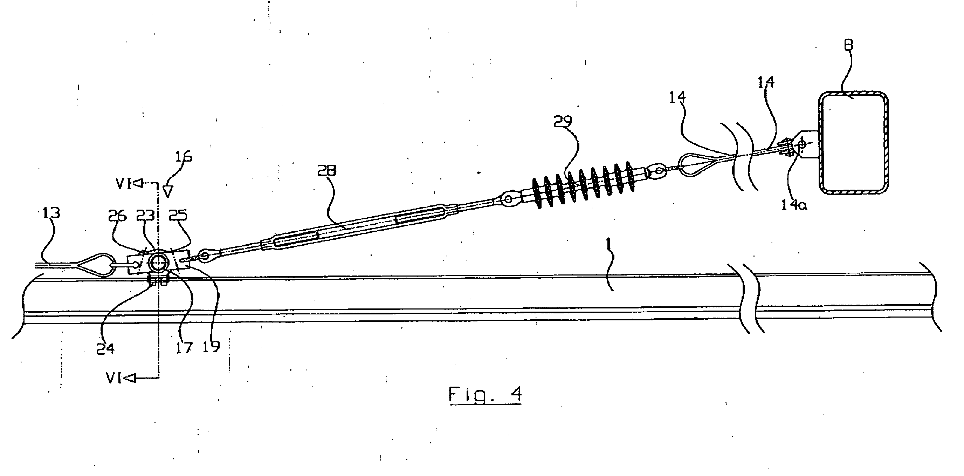

Fig. 4 zeigt das Halteelement 16 in vergrößerter Darstellung in Seitenansicht. Man erkennt das Rohr 17 und die Halteplatte 19, an der die beiden Seile 13 und 14 befestigt sind. Das Tragseil 14 ist über ein Spannschloß 28 und einen Isolator 29 angeschlossen. Statt dem Isolator 29 kann auch beispielsweise an dem Schäkel 21 der Fig. 3 eine Isolierschlaufe angebracht werden. Weiter ist aus Fig. 4 ersichtlich, daß an den Tragelementen 22 und 23 eine Halteeinrichtung 24 angebracht ist, die einen oberen Schenkel der Stromschiene 1 klauenartig übergreift, wie noch besser anhand der Fig. 5 und 6 zu ersehen ist.

Fig. 5 zeigt einen Schnitt längs der Linie V-V der Fig. 4. Man erkennt das Rohr 17 mit angeschweißter Halteplatte 18, die Löcher 28 für die Befestigung der Trag- und Spannseile hat. Weiter sieht man das Tragelement 22, das ähnlich einer Rohrschelle das Rohr 17 umgreift und mit einer Schrauberverbindung 25 an dem Rohr reibschlüssig befestigt wird. Das Tragelement 22 ist nach unten zur nicht dargestellten Stromschiene hin verlängert und bildet damit die Halteeinrichtung 24, die eine Nut 28 aufweist, in welche ein Querträger 30 (Fig. 6) der Stromschiene 1 eingreift, was im Zusammenhang Fig. 6 deutlicher wird. In die Nut 28 ist ein Gleitelement 29 eingesetzt, die ein relatives Gleiten zwischen der Stromschiene 1 und dem gesamten Halteelement 16 in Schienenlängsrichtung gestattet.

Wie am besten aus Fig. 6 zu erkennen ist, bilden die beiden Halteeinrichtungen 24 der beiden Trageelemente 22 und 23 mit ihrer Nut 28 eine Halteklaue, die die Stromschiene 1 hält. Die Stromschiene 1 hat in an sich bekannter Weise einen Querträger 30, der seitlich über zwei spiegelbildlich angeordnete Klemmarme 31 hinausragt, wobei die beiden Klemmarme 31 den Fahrdraht 2 zwischen sich einspannen. Der Querträger 30 greift in die Nuten 28 an den beiden Tragelementen 22 und 23 ein und ist dadurch gehalten. Aufgrund der Gleitelemente 29 in den Nuten 24 ist ein Gleiten in Richtung der Längsachse der Stromschiene 1 möglich.

Weiter erkennt man aus Fig. 6, daß die Montage und Demontage der Stromschiene 1 sehr einfach ist. Die beiden Tragelemente 22 und 23 können durch Lösen der Klemmschrauben 25 und 26 gelöst und damit längs der Achse 27 des Rohres 17 verschoben werden, so daß der Abstand der beiden Nuten 28 so groß ist, daß der Querträger 30 der Stromschiene 1 zwischen die beiden Halteeinrichtungen 24 positioniert werden kann. Sodann werden die beiden Tragelemente 22 und 23 aufeinanderzu bewegt, so daß die Enden des Querträgers 30 in die beiden Nuten 28 eingreifen. Durch Anziehen der Klemmschrauben 25 und 26 kann dann die Position fixiert werden.

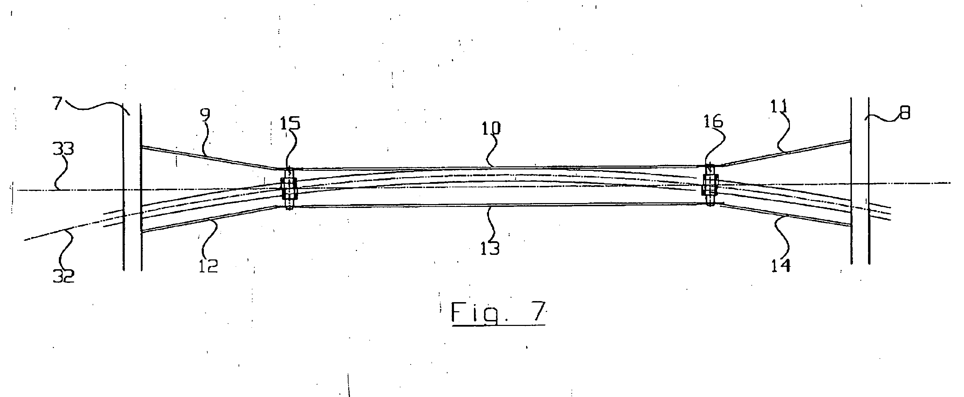

Fig. 7 zeigt eine Draufsicht ähnlich Fig. 2, jedoch mit bogenförmig gekrümmter Stromschiene 1. Daraus ist ersichtlich, daß eine gerade Linie 33, die die Mitten der beiden benachbarten Halteelemente 15 und 16 verbindet, sich in den Halteelementen 15 und 16 auch mit einer gekrümmten Mittellinie 32 der gekrümmten Stromschiene schneidet, was die optimale Einbauanordnung bei gekrümmten Stromschienen ist.

## Patentansprüche

1. Stromschienenbefestigungsanordnung mit einer Stromschiene (1), die an Haltelementen (15, 16) befestigt ist, wobei die Haltelemente (15, 16) mit Tragwerken (3-8) verbunden sind,
**dadurch gekennzeichnet, daß** zwischen zwei benachbarten Tragwerken (3, 5, 7; 4, 6, 8) zwei Halteelemente (15, 16) angeordnet sind,
daß jedes Halteelement (15, 16) über zwei Tragseile (9, 12; 11, 14) mit einem zugeordneten Tragwerk (3, 5, 7; 4, 6, 8) verbunden ist,
daß die zwei Halteelemente (15, 16) über zwei Spannseile (10, 13) direkt miteinander verbunden sind, und daß die Halteelemente (15, 16) ein Gleitelement (35) aufweisen, das ein Gleiten der Stromschiene (1) relativ zu den Halteelementen (15, 16) in Längsrichtung der Stromschiene (1) gestattet.

2. Stromschienenbefestigungsanordnung nach Anspruch 1, **dadurch gekennzeichnet, daß** die Tragseile (9, 12; 11, 14) unter einem Höhenwinkel (α) und unter einem Horizontalwinkel (β) gegenüber der Stromschiene (1) verlaufend angeordnet sind.

3. Stromschiene nach einem der Ansprüche 1 bis 2, **dadurch gekennzeichnet, daß** die Spannseile (10, 13) bei geradliniger Stromschiene (1) parallel zur Stromschiene (1) verlaufen.

4. Stromschienenbefestigungsanordnung nach einem der Ansprüche 1 bis 2, **dadurch gekennzeichnet, daß** die Haltelemente (15, 16) bei bogenförmig gekrümmter Stromschiene (1) so angeordnet sind, daß eine gerade Linie (33), die durch die Mitte von zwei zwischen zwei Tragwerken (3, 5, 7; 4, 6, 8) benachbart liegenden Halteelementen (15, 16) verläuft, sich in den Halteelementen (15, 16) mit einer Mittellinie (32) der bogenförmigen Stromschiene (1) schneidet.

5. Stromschiene nach einem der Ansprüche 1 bis 4, **dadurch gekennzeichnet, daß** der Abstand (L2, L4) der Halteelemente (15, 16) zum zugeordneten Tragwerk (3, 5, 7; 4, 6, 8) und der Abstand (L3) der zwischen zwei Tragwerken (3, 5, 7; 4, 6, 8) liegenden Halteelemente (15, 16) gleich groß ist.

6. Stromschienenbefestigungsanordnung nach einem oder mehreren der Ansprüche 1 bis 5, **dadurch gekennzeichnet, daß** die Halteelemente (15, 16) ein Rohr (17) und zwei das Rohr (17) nach Art einer Rohrschelle umgreifende Tragelemente (22, 23) aufweisen, wobei jedes Tragelement (22, 23) eine Halteeinrichtung (24) mit einer Nut (34) aufweist, in welche ein Querträger (30) der Stromschiene (1) eingreift.

7. Stromschienenbefestigungsanordnung nach Anspruch 6, **dadurch gekennzeichnet, daß** die beiden Tragelemente (22, 23) eines Halteelementes (15, 16) mittels Klemmschrauben (25, 26) reibschlüssig an dem Rohr (17) befestigbar sind.

8. Stromschienenbefestigungsanordnung nach Anspruch 6 oder 7, **dadurch gekennzeichnet, daß** die Gleitelemente (35) in den Nuten (34) angeordnet sind und aus reibungsminderndem Material, vorzugsweise Kunststoff, bestehen.

9. Stromschienenbefestigungsanordnung nach einem der Ansprüche 1 bis 8, **dadurch gekennzeichnet, daß** die Tragseile (9, 11, 12, 14) und/oder die Spannseile (10, 13) aus Kevlar-Fasern bestehen.

## Claims

1. Power rail fastening assembly comprising a bus bar (1), which is attached to holding elements (15, 16), wherein the holding elements (15, 16) are connected with supporting structures (3-8),
**characterized in that** two holding elements (15, 16) are arranged between two adjacent supporting structures (3, 5, 7; 4, 6, 8),that each holding element (15, 16) is connected to an associated support structure (4, 6, 8, 3, 5, 7) via two supporting cables (9, 12; 11, 14),
that the two holding elements (15, 16) are directly interconnected with each other by two tension cables (10, 13), and that the holding elements (15, 16) comprise a sliding element (35), which allows the sliding of the conductor rail (1) relative to the holding elements (15, 16) in the longitudinal direction of the busbar (1).

2. Power rail fastening assembly according to claim 1, **characterized in that** the supporting cables (9, 12; 11, 14) are arranged to run at an elevation angle (α) and at a horizontal angle (β) relative to the conductor rail (1).

3. Power rail fastening assembly according to any one of claims 1 to 2, **characterized in that** for a linear conductor rail (1) the tensioning cables extend (10, 13) parallel to the busbar (1).

4. Power rail fastening assembly according to one of claims 1 to 2, **characterized in that** for an arcuately curved conductor rail (1) the holding elements (15, 16) are arranged so that a straight line (33) passing through the center of two adjacent holding elements (15, 16) situated between two supporting structures (3, 5, 7; 4, 6, 8), intersects a centerline (32) of the arcuate current rail (1) in the holding elements (15, 16).

5. Power rail fastening assembly according to any one of claims 1 to 4, **characterized in that** the distance (L2, L4) of the holding elements (15, 16) to the associated supporting structure (3, 5, 7; 4, 6, 8) and the distance (L3) of the holding elements (15, 16) lying between two supporting structures (3, 5, 7; 4, 6, 8) are equal.

6. Power rail fastening assembly according to one or more of claims 1 to 5, **characterized in that** the holding elements (15, 16) comprise a tube (17) and two support elements (22, 23) which engages around said tube (17) in the manner of a pipe clip, wherein each support member (22, 23) has a holding device (24) having a groove (34) into which a cross member (30) of the conductor rail (1) engages.

7. Power rail fastening assembly according to claim 6, **characterized in that** the two supporting elements (22, 23) of a retaining element (15, 16) can be fastened frictionally engaged on the pipe (17) by means of clamping screws (25, 26).

8. Power rail fastening assembly of claim 6 or 7, **characterized in that** the sliding elements (35) are arranged in the grooves (34) and are made of friction reducing material, preferably of plastic.

9. Power rail fastening assembly according to one of claims 1 to 8, **characterized in that** the supporting cables (9, 11, 12, 14) and/or the tensioning cables (10, 13) are made of Kevlar fibers.

## Revendications

1. Dispositif de fixation de rails conducteurs comprenant un rail conducteur (1) qui est fixé à des éléments de maintien (15,16), lesquels éléments de maintien (15,16) sont reliés à des structures porteuses (3-8),**caractérisé en ce que**
entre deux structures porteuses (3,5,7 ; 4,6,8) adjacentes sont disposés deux éléments de maintien (15,16),
chaque élément de maintien (15,16) est relié par deux câbles porteurs (9,12 ; 11,14) à une structure porteuse (3,5,7 ; 4,6,8) associée,
les deux éléments de maintien (15,16) sont directement reliés entre eux par des câbles de tension (10,13),
et les éléments de maintien (15,16) possèdent un élément de coulissement (35), qui permet un coulissement du rail conducteur (1) par rapport aux éléments de maintien (15,16) dans le sens longitudinal du rail conducteur (1).

2. Dispositif de fixation de rails conducteurs selon la revendication 1, **caractérisé en ce que** les câbles porteurs (9,12 ; 11,14) sont disposés en s'étendant sous un angle d'élévation (α) et sous un angle horizontal (β) par rapport au rail conducteur (1).

3. Rail conducteur selon l'une des revendications 1 à 2, **caractérisé en ce que** les câbles de tension (10,13) s'étendent parallèlement au rail conducteur (1) en suivant de façon rectiligne le rail conducteur (1).

4. Dispositif de fixation de rails conducteurs selon l'une des revendications 1 à 2, **caractérisé en ce que** les éléments de maintien (15,16) sont disposés en courbant en arc de cercle le rail conducteur (1), de telle sorte qu'une ligne droite (33) passe par le centre de deux éléments de maintien (15,16) situés entre deux structures porteuses (3,5,7 ; 4,6,8) adjacentes, laquelle coupe dans les éléments de maintien (15,16) une ligne médiane (32) du rail conducteur (1) courbé.

5. Rail conducteur selon l'une des revendications 1 à 4, **caractérisé en ce que** la distance (L2, L4) entre les éléments de maintien (15,16) et la structure porteuse (3, 5, 7 ; 4,6,8) associée est aussi grande que la distance (L3) entre les éléments de maintien (15,16) situés entre deux structures porteuses (3,5,7 ; 4,6,8).

6. Dispositif de fixation de rails conducteurs selon une ou plusieurs des revendications 1 à 5, **caractérisé en ce que** les éléments de maintien (15,16) présentent un tube (17) et deux éléments de support (22,23) venant en prise sur le tube (17) à la manière d'un collier de serrage, chacun des éléments de support (22,23) possédant un dispositif de retenue (24) avec une rainure (34), dans laquelle un élément transversal (30) du rail conducteur (1) s'engage.

7. Dispositif de fixation de rails conducteurs selon la revendication 6, **caractérisé en ce que** les deux éléments de support (22,23) des éléments de maintien (15,16) peuvent être fixés au tube (17) par friction au moyen de vis de serrage (25,26).

8. Dispositif de fixation de rails conducteurs selon la revendication 6 ou 7, **caractérisé en ce que** les éléments de coulissement (35) sont disposés dans les rainures (34) et sont composés d'un matériau antifriction, de préférence en plastique.

9. Dispositif de fixation de rails conducteurs selon l'une des revendications 1 à 8, **caractérisé en ce que** les câbles porteurs (9,11,12,14) et/ou les câbles de tension (10,13) sont composés en fibres-Kevlar.
